# FASCICULE DE BREVET EUROPEEN

(11) **EP 4 020 926 B1**
(45) Date de publication et mention de la délivrance du brevet: **01.11.2023**
(21) Numéro de dépôt: 21213716.0
(22) Date de dépôt: 10.12.2021
(51) Int. Cl.: H04L 45/02, H04L 45/302

(54) **PROCÉDÉ DE ROUTAGE POUR ROUTER UN FLUX ÉLASTIQUE DANS UN RÉSEAU DE TRANSPORT**
ROUTINGVERFAHREN ZUM ROUTEN EINES ELASTISCHEN FLUSSES IN EINEM TRANSPORTNETZ
ROUTING METHOD FOR ROUTING AN ELASTIC FLOW IN A TRANSPORT NETWORK

(30) Priorité: 23.12.2020 FR 2013990
(43) Date de publication de la demande: 29.06.2022
(73) Titulaire: THALES, 92400 Courbevoie (FR)
(72) Inventeur: MONTENOT, Jean-Marc, 92622 GENNEVILLIERS Cedex (FR); ROLLET, Olivier, 92622 GENNEVILLIERS Cedex (FR); DELATTRE, Michel, 92622 GENNEVILLIERS Cedex (FR)
(74) Mandataire: Atout PI Laplace

(56) Documents cités:
- EP-A1- 2 658 192
- US-A1- 2007 047 469
- US-B1- 9 794 165

## Description

### Domaine technique

La présente invention concerne un procédé de routage pour router un flux élastique dans un réseau de transport ainsi qu'un système de routage et une architecture distribuée associés. Cette invention se situe dans le domaine des télécommunications sécurisées. Plus particulièrement, elle traite les problématiques de cloisonnement fort (intégrité et disponibilité) dans des environnements réseau dits DDIL (pour Denied, Degraded, Intermittent & Limited Bandwith Environments en anglais) ou des environnements réseau ad hoc.

### Technique antérieure

Le routage des données est un mécanisme par lequel des chemins sont sélectionnés dans un réseau pour acheminer des flux de données d'un expéditeur jusqu'à un ou plusieurs destinataires, en optimisant la gestion des ressources. Un flux de réseau désigne une succession de paquets d'information d'une source vers une destination. Ce flux de paquet peut être continu comme dans le cas d'un flux audio ou vidéo ou au contraire élastique comme dans le cas d'un transfert d'un document numérique (page Web, fichier, ...). Un exemple se trouve dans US 9794165.

L'art antérieur divulgue de nombreux procédés de routage et de gestion de ressources. Parmi eux, il existe :
- des protocoles de signalisation : RSVP (pour Resource Réservation Protocol en anglais), RSVP-TE (pour Resource Réservation Protocol : Traffic Engineering en anglais), CR-LDP (pour Constraint-Routing Label Distribution Protocol en anglais) ;
- des protocoles de routage : OSPF (pour Open Shortest Path First en anglais), OSPF multitopologie, OSPF-TE (pour OSPF Traffic Engineering en anglais), CSPF (pour Constrained Shortest Path First en anglais), etc.

Ces différents procédés ne permettent pas d'obtenir une solution de routage distribuée et auto-adaptative servant une qualité de service (QoS) aux flux élastiques utilisant le protocole IP, et, en cas de pénurie de ressources, pilotant un contrôle d'admission des flux selon l'importance opérationnelle. Les exigences pour obtenir une telle solution sont notamment :
- de trouver les chemins optimaux pour les flux d'informations à travers un réseau maillé en prenant en compte les ressources déjà réservées sur chaque composante de ce réseau maillé ;
- d'allouer dynamiquement des ressources pour des flux identifiables, en prenant en compte à la fois des objectifs d'écoulement à tenir, une stabilité suffisante pour les protocoles de transport des flux élastiques et l'importance opérationnelle à maintenir ces objectifs au cours de la vie du flux ;
- d'arbitrer l'ordre de passage des flux en cas de pénurie de ressources, en re-routant les flux existants d'importance moindre vers des routes moins favorables à la tenue des objectifs d'écoulement, libérant ainsi des ressources aux profits des flux importants ;
- de réduire et même d'interdire l'écoulement de flux existants de faible importance, en cas de pénurie générale de ressources, en agissant sur une signalisation destinée aux points d'entrée dans le réseau et aux applications à l'origine des flux ;
- d'écouler les flux d'informations dans chaque composante du réseau maillé selon une répartition optimale utilisant les ressources disponibles de tous les chemins possibles.

Le document WO2018125437 divulgue un modèle par réservation de bande passante dans un réseau de transport avec une méthode de calcul d'un chemin optimal utilisant des critères par niveau de priorité. Plus particulièrement, ce document divulgue un procédé de routage de flux de données dans un réseau de transport maillé mettant en oeuvre des routeurs multitopologie pourvus chacun d'un module intelligent. Ce procédé de routage comprend une étape de comptabilisation des besoins en ressources pour tenir les objectifs d'écoulement quantitatifs et qualitatifs des flux admis. Cette comptabilisation est organisée selon l'importance opérationnelle des flux. Le procédé comprend également une étape de propagation de routeur en routeur des besoins exprimés grâce à une signalisation aiguillée dans une topologie et une correspondance dans chaque routeur entre topologie et importance opérationnelle afin de permettre la comptabilisation des besoins admis. Dans cet art antérieur, on a donc un routage distribué de type bond par bond (ou hop by hop en anglais) entre les différents routeurs multitopologie du réseau de transport et un traitement des flux continus selon leur priorité opérationnelle.

Les opérations militaires deviennent centrées sur l'information où les capteurs fournissent d'importants volumes d'informations qui sont transformés le plus rapidement possible pour des prises de décision dans les temps. Ces opérations militaires nécessitent donc une assurance de services du réseau de transport de données pour l'acheminement de flux de données élastiques. Par « flux de données élastiques », on entend des flux associés à des applications élastiques, c'est-à-dire tolérantes aux délais et à leurs variations (transfert de fichier, consultation de bases de données, consultation de pages web, etc...). Les flux élastiques sont traités par la source et la destination par un protocole de transport comme TCP (pour Transmission Control Protocol en anglais) ou STCP (pour Stream Control Transmission Protocol en anglais) qui adapte le débit de transmission à la capacité disponible de transmission. Ce type de flux n'a pas de réelles contraintes temporelles du moment qu'un transfert fiable de données est assurée. Dit autrement, les flux élastiques ont un volume intrinsèque mais une durée de transmission variable. Les pertes de données ne sont pas tolérées et les besoins en débit sont importants. Les flux de données élastiques ont la particularité de s'adapter au débit disponible par des mécanismes placés à la source et fondés sur des répétitions et des fenêtres d'émission. L'efficacité de ces mécanismes dépend de la fluidité de l'acheminement dans le réseau de transport. Mais ce réseau de transport a une forte variabilité de capacités dues à un graphe s'adaptant à la mobilité du théâtre d'opérations et aux liens radios à débits variables qui le composent. Cette variabilité est rendue nécessaire pour résister aux attaques de cyber électronique (par exemple une attaque par brouillage ciblé). Le procédé de routage du WO2018125437 ne permet pas de gérer de manière optimale le routage de tels flux de données élastiques. En effet, il contraint, par une réservation à priori, des ressources pour les flux élastiques, les limitant à un débit moyen d'écoulement allongeant considérablement la durée des transactions de ces flux élastiques. En outre, le modèle de routage bond par bond ne permet pas d'avoir une prédictibilité court terme suffisante pour que les protocoles de transport des flux élastiques s'adaptent efficacement. Par efficacité, on entend un volume de données utiles pour l'application par rapport au volume de données transmises.

Il existe donc un besoin de proposer un procédé de routage qui permette de gérer de manière optimale et sécurisée l'acheminement de flux de données élastique dans un réseau de transport.

### Exposé de l'invention

La présente invention vise à remédier au moins en partie à ce besoin.

Plus particulièrement, la présente invention vise à améliorer le routage d'un flux de données élastique dans un réseau de transport.

Un premier objet de l'invention concerne un procédé de routage pour router un flux élastique dans un réseau de transport, ledit réseau de transport comportant une pluralité de noeuds et des liens entre lesdits noeuds. Le flux élastique comprend une pluralité de paquets de données. Le flux élastique comporte un niveau de priorité sélectionné parmi au moins deux niveaux de priorité. Le procédé de routage comprend une étape de détection de premiers paquets d'une pluralité de paquets de données d'un flux élastique reçu, une étape de mise en attente desdits premier paquets du flux élastique reçu, une étape de détermination du niveau de priorité dudit flux élastique reçu, une étape d'interrogation d'un graphe, ledit graphe étant adapté pour calculer un chemin optimal pour un niveau de priorité haut d'un flux élastique et au moins un chemin acceptable pour un niveau de priorité inférieur d'un flux élastique. Le chemin optimal et le chemin acceptable sont déterminés en fonction de caractéristiques de noeuds du réseau de transport et/ou en fonction de liens entre lesdits noeuds et/ou en fonction de mesures représentatives d'écoulement de flux de données sur chaque lien du réseau de transport, lesdites mesures représentatives étant collectées en continu. Le procédé comprend une étape d'établissement du chemin optimal ou du chemin acceptable dans le réseau de transport selon le niveau de priorité du flux élastique reçu. L'étape d'établissement fixe des règles d'écoulement de flux de données sur chacun des liens empruntés par le chemin optimal ou par le chemin acceptable. Le procédé comprend une étape de libération des premiers paquets du flux élastique reçu pour leur acheminement par le réseau de transport via le chemin optimal ou via le chemin acceptable.

Ainsi, le procédé de routage de l'invention permet d'étendre le principe d'une méthode de calcul de route utilisant différents critères pour chaque niveau de priorité avec la mise en place d'un mécanisme permettant de répartir des flux élastiques. Cette répartition des flux élastiques permet de minimiser les délais d'acheminement et d'asservir un service d'optimisation favorisant les flux critiques présentant un niveau de priorité haut, dans des réseaux variables et dynamiques. Ce procédé de routage réconcilie écoulement fluide des flux élastiques et forte variabilité des capacités d'acheminement.

Dans un mode de réalisation particulier, le procédé comprend une étape de mesure d'un délai introduit par le réseau de transport concernant l'acheminement de paquets de données du flux élastique reçu et une étape de détermination d'un nouveau chemin optimal ou d'un nouveau chemin acceptable si ledit délai est supérieur à un certain seuil.

Dans un mode de réalisation particulier, le procédé de routage comprend une étape d'ajout d'un niveau de congestion dans le flux élastique en cas de congestion dans le réseau de transport et une étape de délestage d'un autre flux de données de niveau de priorité inférieur pour un acheminement de qualité du flux de données de priorité haut dans ledit réseau de transport.

Un autre objet de l'invention concerne un système de routage pour router un flux élastique dans un réseau de transport, ledit réseau de transport comportant une pluralité de noeuds et des liens entre lesdits noeuds. Le flux élastique comprend une pluralité de paquets de données, ledit flux élastique comportant un niveau de priorité sélectionné parmi au moins deux niveaux de priorité. Le système de routage comprend en amont du réseau de transport une sonde amont adaptée pour détecter des premiers paquets d'une pluralité de paquets de données d'un flux élastique reçu. La sonde amont est adaptée pour mettre en attente les premiers paquets du flux élastique reçu. Cette sonde amont est adaptée pour libérer lesdits premiers paquets du flux élastique reçu pour leur acheminement par le réseau de transport via un chemin optimal ou via un chemin acceptable. Le chemin optimal et le chemin acceptable ont été préalablement déterminés en fonction de caractéristiques de noeuds du réseau de transport et/ou en fonction de liens entre lesdits noeuds et/ou en fonction de mesures représentatives d'écoulement de flux de données sur chaque lien du réseau de transport. Les mesures représentatives sont collectées en continu. Le système de routage comprend un gestionnaire de ressource amont adapté pour déterminer le niveau de priorité du flux élastique de données reçu et pour interroger un graphe en vue d'obtenir le chemin optimal (Wₒₚₜ) si le niveau de priorité dudit flux élastique (flux_{élast}) reçu est le niveau de priorité haut (N1) ou pour obtenir le chemin acceptable (W_{acc}) si le niveau de priorité du flux élastique (flux_{élast}) reçu est un niveau inférieur (N2). Le système de routage comprend un graphe adapté pour stocker le chemin optimal et le chemin acceptable. Le système de routage comprend un routeur amont adapté pour établir le chemin optimal ou le chemin acceptable dans le réseau de transport pour ledit flux élastique reçu. Le routeur amont fixe des règles d'écoulement de flux de données sur chacun des liens empruntés par le chemin optimal ou par le chemin acceptable.

Dans un mode de réalisation particulier, le système comprend en aval du réseau de transport une sonde aval adaptée pour se coordonner avec la sonde amont afin de mesurer un délai introduit par le réseau de transport concernant l'acheminement de paquets de données du flux élastique reçu. Ce délai D est transmis au gestionnaire de ressource amont et un nouveau chemin optimal ou un nouveau chemin acceptable est déterminé si ledit délai est supérieur à un certain seuil.

Dans un mode de réalisation particulier, la sonde aval est adaptée pour ajouter un niveau de congestion dans le flux élastique en cas de congestion dans le réseau de transport.

Un autre objet de l'invention concerne une architecture distribuée comportant un système de routage selon l'un des objets précédents, ladite architecture étant adaptée pour mettre en oeuvre un protocole internet de type IPv4 ou IPv6.

Un autre objet de l'invention concerne un programme d'ordinateur comportant des instructions de programme exploitables par un système de routage adapté pour router un flux élastique selon un des objets précédent qui lorsqu'elles sont exécutées ou interprétées par ledit système de routage déclenchent la mise en oeuvre du procédé pour le routage dudit flux élastique selon un des objets précédents.

La présente invention sera mieux comprise à la lecture de la description détaillée de modes de réalisation pris à titre d'exemples nullement limitatifs et illustrés par les dessins annexés sur lesquels :
la figure 1 illustre un contexte dans lequel l'invention s'inscrit ;
la figure 2 illustre une vue schématique d'un système de routage selon l'invention ;
la figure 3 est un chronogramme illustrant l'enchaînement des différentes étapes d'un procédé de routage mis en oeuvre par le système de routage de la figure 2.

Sur les différentes figures, les éléments identiques ou similaires portent les mêmes références.

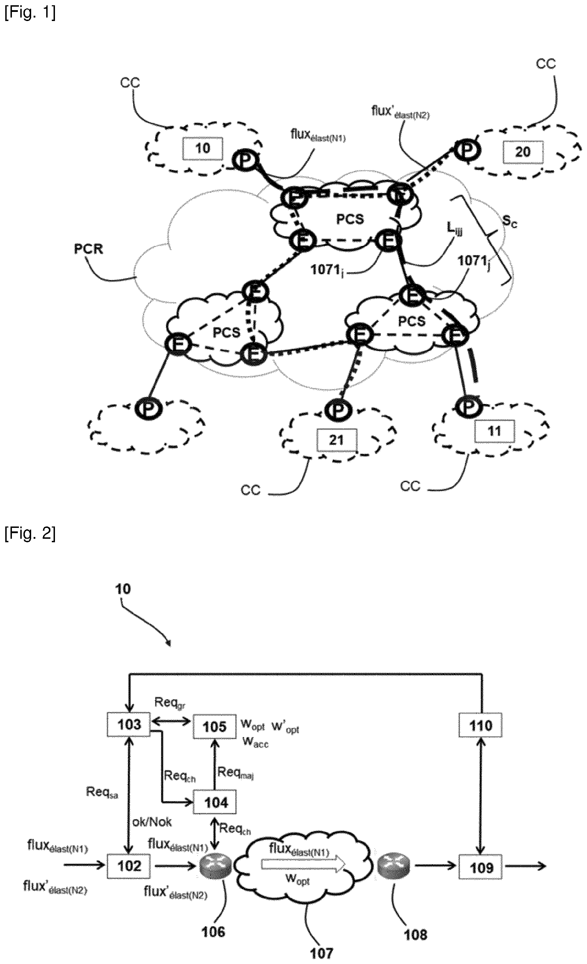

La figure 1 illustre un contexte réseau dans lequel s'inscrit l'invention. Cette figure 1 divulgue :
- une première application source 10 ;
- une seconde application source 20 ;
- une première application destination 11 ;
- une seconde application destination 21 ;
- un réseau de transport 107.

La première application source 10 est adaptée pour émettre des paquets de données d'un premier flux élastique flux_{élast} présentant un haut niveau de priorité N1.

La première application destination 11 est adaptée pour recevoir le premier flux élastique flux_{élast} provenant de la première source de flux 10.

La seconde application source 20 est adaptée pour émettre des paquets de données d'un second flux élastique flux'_{élast} présentant un niveau de priorité N2 inférieur au niveau de priorité N1.

Le réseau de transport 107 est adapté pour transporter le premier flux élastique flux_{élast} et le second flux élastique flux'_{élast} respectivement de la première application source 10 vers la première application destination 11 ou de la seconde application source 20 vers la seconde application destination 21. Différents types de réseau de transport 107 peuvent être utilisés.

Un premier type de réseau de transport 107 comprend une fédération de réseaux opérés par des entités distinctes mettant en oeuvre des allocations dynamiques de ressources pour assurer des services de bout en bout à la demande. Un tel réseau de transport 107 est, par exemple, un réseau sécurisé de type PCN (acronyme anglais pour « Protected Core Networking »), tel qu'illustré sur la figure 1. Un réseau PCN est un réseau qui vise à accroître le partage d'informations entre les nations dans le cadre d'opérations militaires de coalition. Un réseau PCN spécifie l'interconnexion des réseaux de transport nationaux, appelés segments de noyau protégé (PCS), à un réseau de transport fédéré appelé noyau protégé (Pcore). Le Pcore est destiné à fournir des services de transport à haute disponibilité à ses utilisateurs. Dans le mode de réalisation de la figure 1, la première application source 10 et la seconde application source 20 sont présentes dans des entités CC (pour « Coloured Cloud » en anglais) différentes. De la même manière, la première application destination 11 et la seconde application destination 21 sont présentes dans des entités CC différentes.

Un second type de réseau de transport 107 est un réseau radio mettant en oeuvre des allocateurs dynamiques de ressources radio. Un tel réseau est, par exemple, un réseau SATCOM mettant en relation des accès terrestres par un moyen satellite et/ou un allocateur de ressources spectrales et de règles d'accès fournit à chaque accès terrestre en complément de règles de transmission.

Un troisième type de réseau de transport 107 est un réseau de transport à assurance de service établi par contrat. Un tel réseau est, par exemple, un réseau DiffServ (pour « Differentiated Services » en anglais) où des accords de service permettent de préciser les caractéristiques d'écoulement pour des flux identifiés par un code DiffServ marqué dans l'entête de paquet de chacun des paquets de flux.

Dans un mode de réalisation particulier, le réseau de transport 107 est une combinaison du premier type réseau de transport et/ou du second type réseau de transport et/ou du troisième type de réseau de transport.

Dans le mode de réalisation de la figure 1, le réseau de transport 107 comprend :
- une pluralité de noeuds 1071ᵢ avec i allant de 1 à N ;
- une pluralité de liens Lᵢⱼ entre deux noeuds 1071ᵢ et 1071ⱼ.

Chaque noeud de la pluralité de noeuds 1071ᵢ est présent dans un PCS du réseau PCN. Par « noeud », on entend une unité de base du réseau. C'est par exemple un ordinateur, un serveur, un routeur ou toute autre unité connecté au réseau par l'intermédiaire d'une carte réseau ou d'un pilote.

Par lien Lᵢⱼ entre deux noeuds 1071ᵢ et 1071ⱼ, on entend une capacité de transmission caractérisée par un délai de transmission, un débit de transmission, un taux de perte de paquet etc. Dans le cas où le lien est complètement chargé, il est dit congestionné ce qui nécessite alors des nouveaux calculs de chemins pour le passage des flux élastiques dans le réseau de transport 107.

La figure 1 illustre également le principe de délestage des flux non prioritaires dans le cas où un ou plusieurs liens sont congestionnés. Sur cette figure 1, le premier flux élastique flux_{élast} et le second flux élastique flux'_{élast} sont établis. Pour rappel, le premier flux élastique flux_{élast} est établi entre la première application source 10 et la première application destination 11. Le second flux élastique flux'_{élast} est établi entre la seconde application source 20 et la seconde application destination 21. Ces deux flux empruntent un segment de transport commun S_{C}. Lorsque le système de routage détecte sur ce segment de transport commun S_{C} une congestion, il déleste automatiquement le second flux élastique flux'_{élast} de priorité N2 moindre pour privilégier la qualité d'acheminement du premier flux élastique flux_{élast} de niveau de priorité N1 supérieur.

La figure 2 illustre un système de routage conforme à l'invention pour la mise en oeuvre du mécanisme de la figure 1.

Ce système de routage 10 comprend :
- une sonde amont 102 ;
- un gestionnaire de ressource amont 103 ;
- un contrôleur réseau 104 ;
- un graphe 105 ;
- un routeur amont 106 ;
- un routeur aval 108 ;
- une sonde aval 109 ;
- un gestionnaire de ressource aval 110.

La sonde amont 102 est adaptée pour recevoir le premier flux élastique flux_{élast}(N1) d'un niveau de priorité haut N1 et le second flux élastique flux'_{élast}(N2) d'un niveau de priorité inférieur N2. Ces flux élastiques proviennent de la première application source et de la seconde application source. La sonde amont 102 détecte les premiers paquets de ces différents flux et elle les met en attente. La sonde amont 102 est alors adaptée pour émettre un ensemble Reqₛₐ de deux requêtes (une requête par flux) en direction du gestionnaire de ressource amont 103 pour connaître la stratégie de routage du dispositif de routage 10 vis-à-vis de ces flux élastiques flux_{élast}(N1), flux'_{élast}(N2). En réponse, la sonde amont 102 reçoit du gestionnaire de ressource amont 103 un accord OK ou un désaccord KO pour la libération des flux élastiques flux_{élast}(N1), flux'_{élast}(N2) dans le réseau de transport 107. Un désaccord KO correspond à un non acheminement du flux. La sonde ne libère par le flux mais le supprime (fonction DROP) et gèle sa détection pendant un temps prédéfini. Le temps écoulé, si le flux est de nouveau détecté, une nouvelle requête Reqₛₐ est émise vers le gestionnaire de ressource amont 103. Dans le cas d'un accord OK, la sonde amont 102 est adaptée pour transmettre tout ou partie des flux élastiques flux_{élast}(N1), flux'_{élast}(N2) au routeur amont 106. Plus particulièrement, la sonde reçoit du gestionnaire de ressource une réponse par flux. Ainsi différentes combinaisons de réponse sont possibles (OK pour N1 et KO pour N2 ou KO pour N1 et KO pour N2 ou OK pour N1 et OK pour N2). La réponse KO pour N1 et OK pour N2 n'est pas possible du fait des degrés de priorité entre les flux. Si la réponse est OK pour tous les flux, alors ceux-ci seront transmis (libération des paquets en attentes et transmission des paquets futurs. Par exemple, la sonde amont 102 peut transmettre les deux flux élastiques flux_{élast}(N1), flux'_{élast}(N2). En variante, la sonde amont 102 peut ne transmettre qu'un seul des deux flux élastiques, c'est-à-dire le premier flux élastique flux_{élast}(N1) qui a le niveau de priorité le plus haut.

Le gestionnaire de ressource amont 103 est adapté pour recevoir l'ensemble de requêtes Reqₛₐ de la sonde amont 102. Cet ensemble de requêtes Reqₛₐ contient notamment des informations d'entêtes de paquets permettant au gestionnaire de ressource de déduire les niveaux de priorité N1, N2 des flux élastiques flux_{élast} et flux'_{élast}. Par exemple, un code DiffServ lu dans les entêtes peut, par une règle système appliquée par tous les gestionnaires, fixer le niveau de priorité.. Le gestionnaire de ressource amont 103 cherche alors à déterminer en fonction de ces niveaux de priorité, le meilleur chemin pour l'acheminement des flux élastiques à partir des disponibilités du réseau de transport 107. Parmi les chemins possibles, on distingue un chemin optimal Wₒₚₜ pour un flux élastique de niveau de priorité haut N1 et un ou plusieurs chemins acceptables W_{acc} pour un ou plusieurs flux élastiques de niveau de priorité bas N2. Afin de déterminer ces chemins, le gestionnaire de ressource amont 103 interroge par un ensemble Req_{gr} de deux requêtes le graph 105. En retour, le graph 105 lui fournit les informations sur le chemin optimal et sur le ou les chemins acceptables possibles. Plus particulièrement, dans le cas du flux N1 un chemin optimal sera retourné et dans le cas du flux N2 un chemin acceptable sera retourné. Une fois ces informations sur les chemins reçus, le gestionnaire de ressource amont 103 fait une demande Req_{ch} au contrôleur réseau 104 pour un établissement du chemin optimal Wₒₚₜ et d'un ou plusieurs chemins acceptables W_{acc} dans le réseau de transport 107. On notera que dans le cas d'un troisième flux élastique N3 d'un niveau supérieur à N1, un chemin optimal est calculé pour N3 et le chemin préétablit pour N1 est préempté. Dans ce cas, un nouveau calcul de chemin est réalisé pour le flux N1 par le gestionnaire de ressource amont 103 et si la capacité du réseau de transport le permet, un chemin acceptable est calculé.

Le graph 105 est adapté pour déterminer et pour stocker le chemin optimal Wₒₚₜ pour des flux élastiques de niveau de priorité élevé N1 et un ou plusieurs chemins acceptables W_{acc} pour des flux élastiques de niveau inférieur. Le graph 105 est ainsi adapté pour modéliser le réseau de transport 107 sous forme de modèles abstraits de dessins de réseaux. Ces modèles sont constitués par les noeuds (également appelés sommets) et par des liens (ou arêtes) entre ces noeuds. Le graph 105 dispose d'un algorithme de calcul de route permettant de déterminer en fonction des critères de priorités du flux élastique, le meilleur chemin pour l'acheminement du flux à partir des disponibilités du réseau de transport 107. Pour cela, le graph 105 est adapté pour recevoir l'ensemble Req_{gr} de requêtes du gestionnaire de ressource amont 103. Cet ensemble Req_{gr} de requêtes comprend les niveaux de priorité N1, N2 des flux élastiques que l'on cherche à transmettre dans le réseau de transport 107. En fonction de ces niveaux de priorité, le graph 105 fournit le chemin optimal Wₒₚₜ et le ou les chemins acceptables W_{acc} possibles. Ces chemins Wₒₚₜ et W_{acc} possibles sont stockées dans une base de données dans le graph 105. Cette base de données est mise à jour dynamiquement en fonction de l'état du réseau de transport 107 (bande passante minimum, délai, charge des liens, etc...). Pour cette mise à jour, le graph 105 reçoit régulièrement du contrôleur réseau 104 une requête de mise à jour Reqₘₐⱼ. Cette requête de mise à jour Reqₘₐⱼ contient des informations sur les caractéristiques des noeuds du réseau de transport 107, sur les liens entre lesdits noeuds ainsi que sur des mesures représentatives d'écoulement de flux de données sur chaque lien du réseau de transport 107. Par la requête Reqₘₐⱼ, ce sont des métriques qui sont remontées au contrôleur réseau 104, par les noeuds du réseau de transport telles que la latence et qui sont ensuite déversées dans le graphe 105. Plus particulièrement, les caractéristiques de noeuds du réseau de transport 107 et/ou les liens entre lesdits noeuds et/ou des mesures représentatives d'écoulement de flux de données permettent de déterminer le chemin optimal Wₒₚₜ et le ou les chemins acceptables W_{acc}. Les mesures représentatives d'écoulement de flux de données sont collectées en continu.

Le contrôleur réseau 104 est adapté pour recevoir la requête Req_{ch} de demande d'établissement de chemin et pour transmettre cette requête au routeur amont 106. Le contrôleur réseau 104 est également adapté pour recevoir des mises à jour sur l'état du réseau de transport 107 (caractéristiques des noeuds, liens) et pour les transmettre au graphe 105 via la requête de mise à jour Reqₘₐⱼ.

Le routeur amont 106 est adapté pour établir le chemin optimal Wₒₚₜ ou le chemin acceptable W_{acc} dans le réseau de transport 107 pour les différents flux élastiques flux_{élast}, flux'_{élast}. Plus particulièrement, le routeur amont 106 répercute ces demandes de chemin au routeur aval 108. De plus, le routeur amont 106 fixe des règles d'écoulement de flux de données sur chacun des liens empruntés par les différents chemins Wₒₚₜ, W_{acc}. A titre d'exemple, le routeur amont 106 utilisera des technologies MPLS-TE (pour Multiprotocol Label Switching Traffic Engineering en anglais) ou SR-TE (pour Segment Routing Traffic Engineering en anglais). Une fois les chemins établis, le routeur amont 106 en informe le gestionnaire de ressource amont 103 via le contrôleur réseau 104. Un accord OK est alors transmis à la sonde amont 102 qui libère les flux élastiques. Ceux-ci sont reçus par le routeur amont 106 pour être injectés dans le réseau de transport 107. Si un ou des chemins ne peuvent être établis, la sonde amont 102 en est informé et seul le ou les flux qui ont un chemin établi sont libérés. La sonde amont 102 est adaptée pour mesurer en temps réel le flux d'écoulement amont vers le réseau de transport 107 et pour remonter ces mesures vers le gestionnaire de ressource amont 103 qui les stocke dans une mémoire. On notera également que le routeur amont 106 est adapté pour recueillir les métriques des liens provenant du réseau de transport 107 via des protocoles de propagation de métrique. Ces métriques sont mises à jour à chaque changement d'état de lien ou de réservation de flux sur le réseau de transport 107. Ces métriques de liens sont transmises au contrôleur réseau 104 puis au graphe 105 via la requête de mise à jour Reqₘₐⱼ. Le graphe 105 est alors optimisé pour le calcul de chemin de type CSPF (pour « Contraint Short Path First », en anglais). Le routeur amont 106 comprend des fonctions destinées à être insérées dans les chemins de données. Ces fonctions sont initialisées avec des règles systèmes connues de tous les noeuds (priorité, méthode marquage, algorithmes de calcul de chemin) et s'appuient sur des protocoles de propagation des métriques (métriques statiques et dynamiques).

Le routeur aval 108 est adapté pour recevoir le ou les flux élastiques flux_{élast}, flux'_{élast} qui ont transité par le réseau de transport 108. Ce ou ces flux élastiques flux_{élast}, flux'_{élast} sont transmis à la sonde aval 109 puis vers une première application destination et une deuxième application externes au système de routage 10. La sonde aval 109 observe en temps réel le flux d'écoulement aval. Ces observations d'écoulement sont remontées au gestionnaire de ressource aval 110. On notera que pour pouvoir observer le flux d'écoulement amont par la sonde amont 102 et pour pouvoir observer le flux d'écoulement aval par la sonde aval 109, les paquets de données des flux comprennent une signature de paquet IP basée sur le checksum de l'entête et le contenu du paquet IP ainsi qu'un horodatage à l'heure courante. Le routeur aval 108 comprend des fonctions destinées à être insérées dans les chemins de données. Ces fonctions sont initialisées avec des règles systèmes connues de tous les noeuds (priorité, méthode marquage, algorithmes de calcul de chemin) et s'appuient sur des protocoles de propagation des métriques (métriques statiques et dynamiques).

On notera que l'écoulement amont et l'écoulement aval sont des observations permettant de mesurer les caractéristiques de bout en bout du flux, afin que le gestionnaire de ressource 103 puisse prendre une décision de changement du chemin. Le gestionnaire de ressource aval 110 est adapté pour compresser les observations d'écoulement aval et pour les transmettre au gestionnaire de ressource amont 103. La méthode de compression de données pour l'échange des observations entre le gestionnaire de ressource aval 109 et le gestionnaire de ressource amont 103 peut être de la forme :
- première ligne : signature du paquet et horodatage complet ;
- seconde ligne : signature du paquet et delta en temps par rapport à l'horodatage de la première ligne ;
- troisième ligne : signature du paquet et delta en temps par rapport à l'horodatage de la première ligne.

Dans un mode de réalisation particulier, les observations en amont et en aval permettent de mesurer en continu le Délai D introduit par le réseau de transport 107. Si ce délai est supérieur à un certain seuil, le gestionnaire de ressource amont 103 détermine un nouveau chemin optimal w'ₒₚₜ ou un nouveau chemin acceptable W'_{acc} en fonction du flux élastique sondé.

Dans un mode de réalisation particulier, la sonde aval 109 est adaptée pour ajouter un niveau de congestion N_{C} dans le flux élastique flux_{élast} en cas de congestion dans ledit réseau de transport. Pour cela la sonde aval 109, positionne un marquage ECN (pour « Explicit Congestion Notification » en anglais) accompagnant le champ DSCP (pour « Differentiated Services » en anglais) du paquet IP du flux élastique concerné par la congestion. A titre d'exemple, ce niveau de congestion N_{C} est transmis à l'application destination via un chiffreur (non représenté sur la figure 2). Le chiffreur laisse passer le marquage ECN ce qui permet à l'application destination de connaître le niveau de congestion et d'avertir par message l'application source pour action de régulation des flux.

On notera que le gestionnaire de ressource 103 pourra analyser les observations en continu pour en déterminer des tendances afin de détecter des débuts de congestion.

Dans le mode de réalisation de la figure 2, le dispositif de routage 10 appartient à une architecture distribuée. Cette architecture est adaptée pour mettre en oeuvre un protocole de type IPv4 ou IPv6.

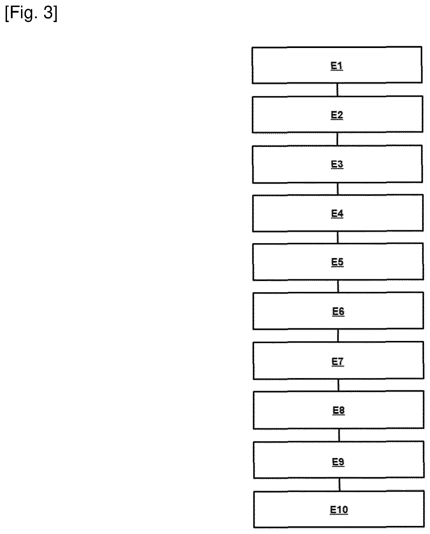

La figure 3 illustre des différentes étapes d'un procédé de routage mis en oeuvre par le système de routage de la figure 2.

Le procédé de routage comprend une étape de détection E1 de premiers paquets d'une pluralité de paquets de données du premier flux élastique flux_{élast}(N1) et une étape E2 de mise en attente desdits premier paquets. Cette étape de détection E1 et cette étape de mise en attente E2 sont mises en oeuvre par la sonde amont 102. Le procédé de routage comprend également une étape de détermination E3 du niveau de priorité du flux élastique flux_{élast} et une étape d'interrogation E4 du graphe 105 par l'envoi de l'ensemble Req_{gr} de requêtes. Cette étape de détermination E3 et cette étape d'interrogation E4 sont effectuées par le le gestionnaire de ressource amont 103. Le procédé comprend une étape d'établissement E5 du chemin optimal Wₒₚₜ pour le premier flux élastique flux_{élast}(N1). Cette étape d'établissement E5 fixe des règles d'écoulement de flux de données sur chacun des liens empruntés par le chemin optimal Wₒₚₜ . Cette étape d'établissement E5 est réalisée par le routeur amont 106.

Le procédé de routage comprend également une étape de libération E6 des premiers paquets du flux élastique flux_{élast} pour leur acheminement par le réseau de transport 107 via le chemin optimal Wₒₚₜ . Cette étape de libération E6 est réalisée par la sonde amont 102.

On notera que les étapes E1 à E6 peuvent être également réalisées dans le but d'acheminer le second flux élastique flux'_{élast}(N2) de priorité moindre. Dans cas, c'est le chemin acceptable W_{acc} qui est déterminé.

Le procédé de routage comprend également une étape E7 de mesure du délai D. Comme il a déjà été décrit, ce délai D est introduit par le réseau de transport 107. Si ce délai est supérieur au seuil S, le procédé comprend une étape E8 de détermination d'un nouveau chemin optimal W'ₒₚₜ ou d'un nouveau chemin acceptable W'_{acc}.

Enfin, le procédé comprend une étape E9 d'ajout d'un niveau de congestion Nc dans le premier flux élastique flux_{élast}(N1) en cas de congestion dans le réseau de transport 107 et une étape de délestage E10 du second flux de données flux'_{élast}(N2) pour un acheminement de qualité du premier flux élastique flux_{élast}(N1 ).

Le système de routage 10 permet :
- une détection des flux sécurisés et leur priorité déclenchant un calcul de chemin ;
- une déclinaison du calcul de chemin en directives d'acheminement portées par le flux ;
- une gestion de files d'attente à chaque noeud de routage tenant compte de la priorité ;
- des mesures temps réels via une métrologie entre le routeur amont 106 et le routeur aval 108 : délais, gigues, pertes, estimation du débit par le nombre de flux par lien ;
- des informations de mesures condensées puis échangées entre le routeur aval 108 et le routeur amont 106 ;
- des annonces de métriques par les noeuds du réseau de transport permettant d'entretenir une base de données de topologie dans le graphe 105 utilisée pour le calcul des chemins, ces métriques comprenant des métriques de délai et de charge de lien ;
- une supervision en temps réels des caractéristiques d'acheminement du flux s'appuyant sur les mesures du flux réel ;
- un réajustement du chemin déclenché par la détection d'une dégradation de l'écoulement du flux assuré par le contrat de service, réajustement comprenant un calcul de nouveau chemin selon des critères dépendant de la priorité.

Le procédé de routage apporte les avantages suivants :
- il permet de répartir au mieux les flux élastiques sur les ressources disponibles du réseau de transport ;
- il permet d'assurer un service caractérisé par les délais à tenir pour acheminer des flux élastiques critiques dans des réseaux variables et dynamiques ;
- ce procédé s'applique sur un réseau noir constitué d'une fédération de réseau ;
- le procédé permet d'entretenir moins d'état dans le réseau de transport en supprimant les protocoles de réservation de type RSVP-TE ;
- le procédé permet un délestage automatique des chemins encombrés pour favoriser l'acheminement des flux critiques, ce délestage est organisé sans un organe de décision central ;
- le procédé permet une simplicité de mise en oeuvre ;
- le procédé permet une garantie de service pour les flux élastiques.

L'invention concerne également un produit programme d'ordinateur comportant des instructions de programme exploitables par le système de routage qui lorsqu'elles sont exécutées ou interprétées par ledit système déclenchent la mise en oeuvre du procédé pour le routage de flux élastique.

L'invention n'est pas limitée aux modes de réalisation et variantes présentées et d'autres modes de réalisation et variantes apparaîtront clairement à l'homme du métier.

Ainsi, le procédé de routage et le système de routage associé sont adaptés pour gérer des flux élastiques présentant un nombre de priorités de flux supérieur à deux.

## Revendications

1. Procédé de routage pour router un flux élastique (flux_{élast}) dans un réseau de transport (107), ledit réseau de transport (107) comportant une pluralité de noeuds et des liens entre lesdits noeuds, ledit flux élastique (flux_{élast}) comprenant une pluralité de paquets de données, ledit flux élastique comportant un niveau de priorité sélectionné parmi au moins deux niveaux de priorité (N1, N2), dans lequel ledit procédé de routage comprend :
- une étape de détection (E1) de premiers paquets d'une pluralité de paquets de données d'un flux élastique (flux_{élast}) reçu ;
- une étape de mise en attente (E2) desdits premier paquets du flux élastique reçu ;
- une étape de détermination (E3) du niveau de priorité dudit flux élastique (flux_{élast}) reçu ;
- une étape d'interrogation (E4) d'un graphe (105), ledit graphe (105) étant adapté pour stocker un chemin optimal (Wₒₚₜ) pour un niveau de priorité haut (N1) d'un flux élastique (flux_{élast}) et au moins un chemin acceptable (W_{acc}) pour un niveau de priorité inférieur (N2) d'un flux élastique (flux_{élast}), ledit chemin optimal (Wₒₚₜ) et ledit chemin acceptable (W_{acc}) ayant été préalablement déterminés en fonction de caractéristiques de noeuds du réseau de transport (107) et/ou en fonction de liens entre lesdits noeuds et/ou en fonction de mesures représentatives d'écoulement de flux de données sur chaque lien du réseau de transport (107), lesdites mesures représentatives étant collectées en continu ;
- une étape d'établissement (E5) du chemin optimal (Wₒₚₜ) ou du chemin acceptable (W_{acc}) dans le réseau de transport (107) selon le niveau de priorité du flux élastique (flux_{élast}) reçu, ladite étape d'établissement (E5) fixant des règles d'écoulement de flux de données sur chacun des liens empruntés par le chemin optimal (Wₒₚₜ) ou par le chemin acceptable (Wacc) ;
- une étape de libération (E6) des premiers paquets du flux élastique (flux_{élast}) reçu pour leur acheminement par le réseau de transport (107) via le chemin optimal (Wₒₚₜ) ou via le chemin acceptable (W_{acc}).

2. Procédé de routage selon la revendication 1, dans lequel ledit procédé comprend une étape (E7) de mesure d'un délai (D) introduit par le réseau de transport (107) concernant l'acheminement de paquets de données du flux élastique reçu (flux_{élast}) et une étape (E8) de détermination d'un nouveau chemin optimal (W'ₒₚₜ) ou d'un nouveau chemin acceptable (W'_{acc}) si ledit délai (D) est supérieur à un certain seuil (S).

3. Procédé de routage selon l'une quelconque des revendications 1 ou 2, dans lequel ledit procédé de routage comprend une étape (E9) d'ajout d'un niveau de congestion (N_{C}) dans le flux élastique (flux_{élast}) en cas de congestion dans le réseau de transport (107) et une étape (E10) de délestage d'un autre flux de données (flux'_{élast}) de niveau de priorité inférieur (N2) pour un acheminement de qualité du flux de données de priorité haut (N1) dans ledit réseau de transport (107).

4. Système de routage pour router un flux élastique (flux_{élast}) dans un réseau de transport (107), ledit réseau de transport comportant une pluralité de noeuds et des liens entre lesdits noeuds, ledit flux élastique (flux_{élast}) comprenant une pluralité de paquets de données, ledit flux élastique (flux_{élast}) comportant un niveau de priorité sélectionné parmi au moins deux niveaux de priorité (N1, N2), ledit système de routage (10) comprenant en amont du réseau de transport (107) :
- une sonde amont (102) adaptée pour détecter des premiers paquets d'une pluralité de paquets de données d'un flux élastique (flux_{élast}) reçu, ladite sonde amont (102) étant adaptée pour mettre en attente lesdits premier paquets du flux élastique (flux_{élast}) reçu, et ladite sonde amont (102) étant adaptée pour libérer lesdits premier paquets du flux élastique (flux_{élast}) reçu pour leur acheminement par le réseau de transport (107) via un chemin optimal (Wₒₚₜ) ou via un chemin acceptable (W_{acc}), ledit chemin optimal (Wₒₚₜ) et ledit chemin acceptable (W_{acc}) ayant été préalablement déterminés en fonction de caractéristiques de noeuds du réseau de transport (107) et/ou fonctions de liens entre lesdits noeuds et/ou en fonction de mesures représentatives d'écoulement de flux de données sur chaque lien du réseau de transport (107), lesdites mesures représentatives étant collectées en continu ;
- un gestionnaire de ressource amont (103) adapté pour déterminer le niveau de priorité (N) dudit flux élastique de données (flux_{élast}) reçu et pour interroger un graphe (105) en vue d'obtenir le chemin optimal (Wₒₚₜ) si le niveau de priorité dudit flux élastique (flux_{élast}) reçu est le niveau de priorité haut (N1) ou pour obtenir le chemin acceptable (W_{acc}) si le niveau de priorité du flux élastique (flux_{élast}) reçu est un niveau inférieur (N2) ;
- un graphe (105) adapté pour stocker le chemin optimal (Wₒₚₜ) et au moins le chemin acceptable (W_{acc}) ;
- un routeur amont (106) adapté pour établir le chemin optimal (Wₒₚₜ) ou le chemin acceptable (W_{acc}) dans le réseau de transport (107) pour ledit flux élastique (flux_{élast}) reçu, ledit routeur amont (106) fixant des règles d'écoulement de flux de données sur chacun des liens empruntés par le chemin optimal (Wₒₚₜ) ou par le chemin acceptable (W_{acc}).

5. Système de routage selon la revendication 4, dans lequel ledit système (10) comprend en aval du réseau de transport (107) :
- une sonde aval (109) adaptée pour se coordonner avec la sonde amont (102) afin de mesurer un délai (D) introduit par le réseau de transport (107) concernant l'acheminement de paquets de données du flux élastique reçu (flux_{élast}), ledit délai (D) étant transmis au gestionnaire de ressource amont (103) et un nouveau chemin optimal (w'ₒₚₜ) ou un nouveau chemin acceptable (W'_{acc}) est déterminé si ledit délai (D) est supérieur à un certain seuil (S).

6. Système de routage selon la revendication 5, dans lequel la sonde aval (109) est adaptée pour ajouter un niveau de congestion (N_{C}) dans le flux élastique (flux_{élast}) en cas de congestion dans ledit réseau de transport (107) pour un délestage d'un autre flux élastique (flux'_{élast}) de niveau de priorité inférieur (N2) en vue d'un acheminement de qualité du flux élastique (flux_{élast}) de niveau de priorité haut (N1).

7. Architecture distribuée comportant un système de routage (10) selon l'une quelconque des revendications 4 à 6, ladite architecture étant adaptée pour mettre en oeuvre un protocole internet de type IPv4 ou IPv6.

8. Produit programme d'ordinateur comportant des instructions de programme exploitables par un système de routage (10) adapté pour router un flux élastique (flux_{élast}) selon l'une quelconque des revendications 4 à 6, qui lorsqu'elles sont exécutées ou interprétées par ledit système de routage (10) déclenchent la mise en oeuvre du procédé pour le routage dudit flux élastique (flux_{élast}) selon l'une quelconque des revendications 1 à 3.

## Patentansprüche

1. Routing-Verfahren zum Routen eines elastischen Stroms (flux_{élast}) in einem Transportnetz (107), wobei das Transportnetz (107) eine Vielzahl von Knoten und Verbindungen zwischen den Knoten aufweist, wobei der elastische Strom (flux_{élast}) eine Vielzahl von Datenpaketen umfasst, wobei der elastische Strom eine aus mindestens zwei Prioritätsstufen (N1, N2) ausgewählte Prioritätsstufe aufweist, wobei das Routing-Verfahren Folgendes umfasst:
- einen Schritt des Erkennens (E1) von ersten Paketen aus einer Vielzahl von Datenpaketen eines empfangenen elastischen Stroms (flux_{élast});
- einen Schritt des Setzens (E2) der ersten Pakete des empfangenen elastischen Stroms in eine Warteschlange;
- einen Schritt des Bestimmens (E3) der Prioritätsstufe des empfangenen elastischen Stroms (flux_{élast});
- einen Schritt des Abfragens (E4) eines Graphen (105), wobei der Graph (105) zum Speichern eines optimalen Pfads (Wₒₚₜ) für eine hohe Prioritätsstufe (N1) eines elastischen Stroms (flux_{élast}) und mindestens eines akzeptablen Pfads (W_{acc}) für eine niedrigere Prioritätsstufe (N2) eines elastischen Stroms (flux_{élast}) ausgelegt ist, wobei der optimale Pfad (Wₒₚₜ) und der akzeptable Pfad (W_{acc}) zuvor in Abhängigkeit von Charakteristiken von Knoten des Transportnetzes (107) und/oder in Abhängigkeit von Verbindungen zwischen den Knoten und/oder in Abhängigkeit von repräsentativen Messwerten des Flusses von Datenströmen auf jeder Verbindung des Transportnetzes (107) bestimmt wurden, wobei die repräsentativen Messwerte kontinuierlich gesammelt werden;
- einen Schritt des Festlegens (E5) des optimalen Pfades (Wₒₚₜ) oder des akzeptablen Pfades (W_{acc}) im Transportnetz (107) gemäß der Prioritätsstufe des empfangenen elastischen Stroms (flux_{élast}), wobei der Festlegungsschritt (E5) Regeln für den Fluss von Datenströmen auf jeder der Verbindungen festlegt, die von dem optimalen Pfad (Wₒₚₜ) oder dem akzeptablen Pfad (W_{acc}) benutzt werden;
- einen Schritt des Freigebens (E6) der ersten Pakete des empfangenen elastischen Stroms (flux_{élast}) für ihre Weiterleitung durch das Transportnetz (107) über den optimalen Pfad (Wₒₚₜ) oder über den akzeptablen Pfad (W_{acc}).

2. Routing-Verfahren nach Anspruch 1, wobei das Verfahren einen Schritt (E7) des Messens einer vom Transportnetz (107) eingeführten Verzögerung (D) bezüglich der Weiterleitung von Datenpaketen des empfangenen elastischen Stroms (flux_{élast}) und einen Schritt (E8) des Bestimmens eines neuen optimalen Pfades (W'ₒₚₜ) oder eines neuen akzeptablen Pfades (W'_{acc}) umfasst, wenn die Verzögerung (D) größer als ein bestimmter Schwellenwert (S) ist.

3. Routing-Verfahren nach Anspruch 1 oder 2, wobei das Routing-Verfahren einen Schritt (E9) des Hinzufügens einer Überlastungsstufe (Nc) in dem elastischen Strom (flux_{élast}) im Falle einer Überlastung im Transportnetz (107) und einen Schritt (E10) des Entlastens eines anderen Datenstroms (flux'_{élast}) der niedrigeren Prioritätsstufe (N2) für eine Qualitätsweiterleitung des Datenstroms hoher Priorität (N1) im Transportnetz (107) umfasst.

4. Routing-System zum Routen eines elastischen Stroms (flux_{élast}) in einem Transportnetz (107), wobei das Transportnetz eine Vielzahl von Knoten und Verbindungen zwischen den Knoten aufweist, wobei der elastische Strom (flux_{élast}) eine Vielzahl von Datenpaketen umfasst, wobei der elastische Strom (flux_{élast}) eine aus mindestens zwei Prioritätsstufen (N1, N2) ausgewählte Prioritätsstufe aufweist, wobei das Routing-System (10) stromaufwärts des Transportnetzes (107) Folgendes umfasst:
- eine stromaufwärtige Sonde (102), die zum Erkennen von ersten Paketen aus einer Vielzahl von Datenpaketen eines empfangenen elastischen Stroms (flux_{élast}) ausgelegt ist, wobei die stromaufwärtige Sonde (102) zum Setzen der ersten Pakete des empfangenen elastischen Stroms (flux_{élast}) in eine Warteschlange ausgelegt ist, und wobei die stromaufwärtige Sonde (102) zum Freigeben der ersten Pakete des empfangenen elastischen Stroms (flux_{élast}) zur Weiterleitung durch das Transportnetz (107) über einen optimalen Pfad (Wₒₚₜ) oder über einen akzeptablen Pfad (W_{acc}) ausgelegt ist, wobei der optimale Pfad (Wₒₚₜ) und der akzeptable Pfad (W_{acc}) zuvor in Abhängigkeit von Charakteristiken von Knoten des Transportnetzes (107) und/oder in Abhängigkeit von Verbindungen zwischen den Knoten und/oder in Abhängigkeit von repräsentativen Messwerten des Flusses von Datenströmen auf jeder Verbindung des Transportnetzes (107) bestimmt wurden, wobei die repräsentativen Messwerte kontinuierlich gesammelt werden;
- einen stromaufwärtigen Ressourcenmanager (103), der zum Bestimmen der Prioritätsstufe (N) des empfangenen elastischen Datenstroms (flux_{élast}) und zum Abfragen eines Graphen (105) ausgelegt ist, um den optimalen Pfad (Wₒₚₜ) zu erhalten, wenn die Prioritätsstufe des empfangenen elastischen Datenstroms (flux_{élast}) die hohe Prioritätsstufe (N1) ist, oder um den akzeptablen Pfad (W_{acc}) zu erhalten, wenn die Prioritätsstufe des empfangenen elastischen Datenstroms (flux_{élast}) eine niedrige Stufe (N2) ist;
- einen Graph (105), der zum Speichern des optimalen Pfads (Wₒₚₜ) und mindestens des akzeptablen Pfads (W_{acc}) ausgelegt ist;
- einen stromaufwärtigen Router (106), der zum Festlegen des optimalen Pfads (Wₒₚₜ) oder des akzeptablen Pfads (W_{acc}) im Transportnetz (107) für den empfangenen elastischen Strom (flux_{élast}) ausgelegt ist, wobei der stromaufwärtige Router (106) Regeln für den Fluss von Datenströmen auf jeder der Verbindungen festlegt, die vom optimalen Pfad (Wₒₚₜ) oder vom akzeptablen Pfad (W_{acc}) benutzt werden.

5. Routing-System nach Anspruch 4, wobei das System (10) stromabwärts des Transportnetzes (107) Folgendes umfasst:
- eine stromabwärtige Sonde (109), die zum Koordinieren mit der stromaufwärtigen Sonde (102) ausgelegt ist, um eine durch das Transportnetz (107) eingeführte Verzögerung (D) bezüglich der Weiterleitung von Datenpaketen des empfangenen elastischen Stroms (flux_{élast}) zu messen, wobei die Verzögerung (D) zu dem stromaufwärtigen Ressourcenmanager (103) weitergeleitet wird und ein neuer optimaler Pfad (W'ₒₚₜ) oder ein neuer akzeptabler Pfad (W'_{acc}) bestimmt wird, wenn die Verzögerung (D) größer als ein bestimmter Schwellenwert (S) ist.

6. Routing-System nach Anspruch 5, wobei die stromabwärtige Sonde (109) zum Hinzufügen einer Überlastungsstufe (Nc) in dem elastischen Strom (flux_{élast}) im Falle einer Überlastung in dem Transportnetz (107) zum Entlasten eines anderen elastischen Stroms (flux'ₑₗₐₛₜ) mit niedriger Prioritätsstufe (N2) für eine Qualitätsweiterleitung des elastischen Stroms (flux_{élast}) mit hoher Prioritätsstufe (N1) ausgelegt ist.

7. Verteilte Architektur, die ein Routing-System (10) nach einem der Ansprüche 4 bis 6 aufweist, wobei die Architektur zum Implementieren eines Internetprotokolls vom Typ IPv4 oder IPv6 ausgelegt ist.

8. Computerprogrammprodukt, das Programmbefehle aufweist, die von einem Routing-System (10) benutzt werden können, das zum Routen eines elastischen Stroms (flux_{élast}) nach einem der Ansprüche 4 bis 6 ausgelegt ist, die bei Ausführung oder Interpretation durch das Routing-System (10) die Umsetzung des Verfahrens zum Routen des elastischen Stroms (flux_{élast}) nach einem der Ansprüche 1 bis 3 auslösen.

## Claims

1. A routing method for routing an elastic stream (flux_{élast}) in a transport network (107), said transport network (107) having a plurality of nodes and links between said nodes, said elastic stream (flux_{élast}) comprising a plurality of data packets, said elastic stream having a priority level selected from among at least two priority levels (N1, N2), wherein said routing method comprises:
- a step of detecting (E1) first packets of a plurality of data packets of an elastic stream (flux_{élast}) received;
- a step of queueing (E2) of said first packets of the elastic stream received;
- a step of determining (E3) the priority level of said elastic stream (flux_{élast}) received;
- a step of interrogating (E4) a chart (105), said chart (105) being adapted to store an optimal path (Wₒₚₜ) for a high priority level (N1) of an elastic stream (flux_{élast}) and at least one acceptable path (W_{acc}) for a lower priority level (N2) of an elastic stream (flux_{élast}), said optimal path (Wₒₚₜ) and said acceptable path (W_{acc}) having been determined previously as a function of characteristics of nodes of the transport network (107) and/or as a function of links between said nodes and/or as a function of measurements representative of the flow of data streams on each link of the transport network (107), said representative measurements being collected continuously;
- a step of establishing (E5) the optimal path (Wₒₚₜ) or the acceptable path (W_{acc}) in the transport network (107) according to the priority level of the elastic stream (flux_{élast}) received, said establishing step (E5) setting rules for the flow of data streams on each of the links followed by the optimal path (Wₒₚₜ) or by the acceptable path (W_{acc});
- a step of releasing (E6) the first packets of the elastic stream (flux_{élast}) received for them to be forwarded by the transport network (107) via the optimal path (Wₒₚₜ) or via the acceptable path (W_{acc}).

2. The routing method according to claim 1, wherein said method comprises a step (E7) of measuring a delay (D) introduced by the transport network (107) regarding the forwarding of data packets of the elastic stream received (flux_{élast}) and a step (E8) of determining a new optimal path (W'ₒₚₜ) or a new acceptable path (W'_{acc}) if said delay (D) is greater than a certain threshold (S).

3. The routing method according to any one of claims 1 or 2, wherein said routing method comprises a step (E9) of adding a congestion level (Nc) in the elastic stream (flux_{élast}) in case of congestion in the transport network (107) and a step (E10) of shedding another data stream (flux'_{élast}) of lower priority level (N2) for a quality forwarding of the high-priority data stream (N1) in said transport network (107).

4. A routing system for routing an elastic stream (flux_{élast}) in a transport network (107), said transport network having a plurality of nodes and links between said nodes, said elastic stream (flux_{élast}) comprising a plurality of data packets, said elastic stream (flux_{élast}) having a priority level selected from among at least two priority levels (N1, N2), said routing system (10) comprising, upstream of the transport network (107):
- an upstream probe (102) adapted to detect first packets of a plurality of data packets of an elastic stream (flux_{élast}) received, said upstream probe (102) being adapted to queue said first packets of the elastic stream (flux_{élast}) received, and said upstream probe (102) being adapted to release said first packets of the elastic stream (flux_{élast}) received for them to be forwarded by the transport network (107) via an optimal path (Wₒₚₜ) or via an acceptable path (W_{acc}), said optimal path (Wₒₚₜ) and said acceptable path (W_{acc}) having been determined previously as a function of characteristics of nodes of the transport network (107) and/or as a function of links between said nodes and/or as a function of measurements representative of the flow of data streams on each link of the transport network (107), said representative measurements being collected continuously;
- an upstream resource manager (103) adapted to determine the priority level (N) of said elastic data stream (flux_{élast}) received and to interrogate a chart (105) in order to obtain the optimal path (Wₒₚₜ) if the priority level of said elastic stream (flux_{élast}) received is the high priority level (N1) or to obtain the acceptable path (W_{acc}) if the priority level of the elastic stream (flux_{élast}) received is a lower level (N2);
- a chart (105) adapted to store the optimal path (Wₒₚₜ) and at least the acceptable path (W_{acc});
- an upstream router (106) adapted to establish the optimal path (Wₒₚₜ) or the acceptable path (W_{acc}) in the transport network (107) for said elastic stream (flux_{élast}) received, said upstream router (106) setting rules for the flow of data streams on each of the links followed by the optimal path (Wₒₚₜ) or by the acceptable path (W_{acc}).

5. The routing system according to claim 4, wherein said system (10) comprises, downstream of the transport network (107):
- a downstream probe (109) adapted to coordinate with the upstream probe (102) in order to measure a delay (D) introduced by the transport network (107) regarding the forwarding of data packets of the elastic stream received (flux_{élast}), said delay (D) being transmitted to the upstream resource manager (103) and a new optimal path (W'ₒₚₜ) or a new acceptable path (W'_{acc}) is determined if said delay (D) is greater than a certain threshold (S).

6. The routing system according to claim 5, wherein the downstream probe (109) is adapted to add a congestion level (N_{C}) in the elastic stream (flux_{élast}) in case of congestion in said transport network (107) for dumping of another elastic stream (flux'_{élast}) of lower priority level (N2) with a view to a quality forwarding of the elastic stream (flux_{élast}) of high priority level (N1).

7. A distributed architecture having a routing system (10) according to any one of claims 4 to 6, said architecture being adapted to implement an internet protocol of IPv4 or IPv6 type.

8. A computer program product having program instructions that can be used by a routing system (10) adapted to route an elastic stream (flux_{élast}) according to any one of claims 4 to 6, which, when they are executed or interpreted by said routing system (10), trigger the implementation of the method for the routing of said elastic stream (flux_{élast}) according to any one of claims 1 to 3.
